# EUROPEAN PATENT SPECIFICATION

(11) **EP 2 587 630 B1**
(45) Date of publication and mention of the grant of the patent: **27.07.2016**
(21) Application number: 10855153.2
(22) Date of filing: 06.12.2010
(51) Int. Cl.: H02K 1/12, H02K 1/27, H02K 17/16, H02K 15/02, H02K 15/03, H02K 15/00, H02K 1/02, H02K 3/47

(54) **SLOTLESS AMORPHOUS FERROALLOY MOTOR WITH RADIAL MAGNETIC CIRCUIT AND MANUFACTURING METHOD THEREOF**
NUTENLOSER AMORPHER MOTOR AUS EINER EISENLEGIERUNG MIT RADIALER MAGNETSCHALTUNG UND HERSTELLUNGSVERFAHREN DAFÜR
MOTEUR À FERROALLIAGE AMORPHE SANS ENCOCHES, COMPORTANT UN CIRCUIT MAGNÉTIQUE RADIAL ET PROCÉDÉ DE FABRICATION DE CE MOTEUR

(30) Priority: 26.07.2010 CN 201010237537
(43) Date of publication of application: 01.05.2013
(73) Proprietor: Dong Ming Motor Electric (Shenzhen) Co., Ltd., Shenzhen, Guangdong (CN); Xie, Wei, Shenzhen, Guangdong (CN)
(72) Inventor: XIE, Wei, Shenzhen, Guangdong 518104 (CN)
(74) Representative: ProI European Patent Attorneys
(86) International application number: PCT/CN2010/001969
(87) International publication number: WO 2012/012925

(56) References cited:
- WO-A1-94/07295
- CA-A1- 1 136 200
- CA-A1- 1 136 200
- CN-A- 1 874 113
- CN-C- 1 084 543
- CN-C- 1 084 543
- CN-U- 201 742 177
- CN-Y- 2 891 450
- JP-A- 2009 189 094
- US-A- 4 286 188
- US-A- 4 287 446

## Description

### Technical Field

The invention relates to the magnetic circuit components for electric machine manufacturing, especially to the stator or rotor body featured by armature winding and magnetic materials.

### Background Art

The amorphous ferroalloy material is the material possessing long-range disordered structure, which is formed by active metal atoms under high temperature molten status failing to arrange orderly according to definite crystalline state rule during flash cooling. As compared with the traditional silicon steel material, the amorphous ferroalloy material has the advantages of high magnetic permeability, high resistance, low eddy current loss and superior high frequency characteristic, etc. Nevertheless, it is of poor processing characteristic, difficult to be rolled into sheets and difficult to be cut and processed with large sizes. As for the prior art, the electric machine includes the generator and the electromotor, comprising shell, end covers, stator, rotor and electric machine shaft. The stator is fixed on the inside of the shell. The rotor is fixed on the electric machine shaft and arranged inside the stator. An air gap is arranged between the rotor and the stator. The electric machine shaft passes through the stator iron core and is rotatably mounted onto the mounting position determined by the shell and the end covers. The stator is composed of the stator iron core and the stator winding. Generally, the stator iron core with axial tooth slots inside is made by pressing and laminating silicon steel stampings and other soft-magnetic materials, and the stator winding is embedded into the tooth slots. For electric machine loss, iron loss takes up a considerable proportion which consumes non-renewable energy in the form of emitting heat, in the meantime, increases the electric machine temperature rise and reduces the electric machine efficiency. It is a great project for electric machine design as concerning the reduction of electric machine iron loss, and it is one orientation for electric machine research and development as concerning the using of new materials of high magnetic permeability, high resistance and low eddy current loss to replace the silicon steel plates. Electric machines prepared from amorphous ferroalloy material is adopted for the prior art, for example, in the Chinese patent application New Type Motor Prepared from Amorphous Material with the publication number of CN 1874113A, a cylindrical amorphous shell and silicon steel plates poles are coupled and bonded to form the tooth slots for the stator iron core. Stator windings are embedded inside the tooth slots for preparing the stator. Amorphous material is used partially in the electric machine stator iron core. For the electric machine with the iron core made from mixed materials, the rotor is still of the traditional structure, whose stator iron core is the bonding of two components separately made from two materials. With complicated structure and elaboration process, moreover, the electromagnetic noise and tooth slot loss brought by the tooth slot effect are still not overcome. While, in the slotless electric machine for the purpose of overcoming the defects brought by the tooth slot effect, is adopted the technology disclosed in the Patent for Utility Model titled High Output Brushless and Slotless Permanent Magnets Motor, whose publication number is CN2891450Y for example, in it the stator iron core is still made by laminating traditional silicon steel plates, and the rotor is composed of the iron core made from the traditional material and permanent magnet sheathed around the iron core. Inherent defects of the silicon steel plate concerning magnetic permeability, resistance, eddy current loss and high frequency characteristic, etc. enabling it to fail to produce electric machine of higher efficiency.

Several prior art slotless electric machines and related technologies are disclosed in CA 1136200A1, JP2009189094A, CN 1084543C, US4287446A,

US4286188, and WO94/07295.

### Contents of the invention

The technical problem the invention aims to settle, lies in avoiding the above-mentioned deficiencies of prior art and providing a slotless amorphous ferroalloy electric machine with radial magnetic circuit. The electric machine has the advantages of low eddy current loss, superior high frequency characteristic, low electromagnetic noise, no tooth slot loss, high efficiency, high power density and high material utilization, etc. Meanwhile, the invention also provides the manufacturing method of the slotless amorphous ferroalloy electric machine with radial magnetic circuit.

An inner rotor electric machine according to the invention is defined in claims 1 - 7.

In the invention, the stator winding may be directly fixed on the internal wall of the said stator iron core, and the metal reinforcing sleeve may be fixed directly on the internal wall of the stator winding.

In the invention, internal wall of the said stator iron core may be installed with a first insulation bobbin. Main body of the first insulation bobbin is in the shape of a cylinder with one end surface set with a ring-shaped radial flange. One end which is not set with flange for the two identical first insulation bobbins respectively are embedded from both ends of the inner capacity cavity of the stator iron core, butted against each other and fixed on the internal wall of the stator iron core. The ring-shaped radial flanges at the end surfaces of the said two first insulation bobbins are tightened against both ends of the inner capacity cavity of the stator iron core.

In the invention, the inner cavity of the said stator winding is supported by a cylindrical second insulation bobbin and fixed therein. The axial length of the second insulation bobbin is identical to that of the stator winding. The internal wall of the said second insulation bobbin is fixed on the external cylindrical surface of the metal reinforcing sleeve.

Stability and insulation safety of the stator winding may be strengthened by the structures of various insulation bobbins.

Therefore, the stator winding "fixed on the internal cylindrical surface of the stator core" stated by the invention can either be the direct fixation of the stator winding onto the internal wall of the stator iron core, or the fixation of the stator winding on the internal wall of the first insulation bobbin, then the fixation of the first insulation bobbin on the internal wall of the stator iron core. The said "fixation" includes the fixation with adhesives. The adhesives for bonding and fixation may be any adhesive with the operating temperature no lower than the maximum temperature rise limited by the electric machine.

The slotless amorphous ferroalloy electric machine with radial magnetic circuit in the invention is the brushless DC electric machine or AC synchronous electric machine, including DC or AC electromotor and generator. Meanwhile, it may also be AC asynchronous electric machine.

The rotor stated by the invention includes the rotor iron core and the permanent magnets. The said rotor iron core may be made by laminating and pressing conventional material, for example the silicon steel stampings; or, the said rotor iron core is the hollow cylindrical structure made from amorphous ferroalloy material, with the radial external surface matched with the permanent magnets. The permanent magnets are embedded in or sheathed outside of the external surface of the rotor iron core and fixed. Keyway for connecting with the said electric machine shaft is provided on the inner bore wall of the said rotor iron core. The said permanent magnets are neodymium-iron-boron alloy of high density of magnetic energy, or the strontium or barium ferrite.

When the permanent magnets are hollow cylindrical permanent magnetic cylinders with multiple poles formed on the circumferential surface via magnetization, external surface of the rotor iron core is the cylinder, with the outer diameter matched with the inner diameter of cylinders of the permanent magnets. Cylinder of the said permanent magnets are directly sheathed on the rotor iron core and fixed.

When the permanent magnets are even-numbered tile-shape sectional bars or "V" shaped sectional bar solids, the same amount of axial grooves matched with the sectional forms of all the permanent magnets are provided on the external surface of the rotor iron core, and all the permanent magnets shall be embedded into the grooves and fixed. The said axial grooves may be dovetail grooves, and accordingly, the said permanent magnets are with dovetail structures.

When the invention is embodied in the AC asynchronous machine, the rotor as stated by the invention includes the rotor iron core and the squirrel-cage on the surface thereon. The rotor iron core is sheathed on the electric machine shaft. The said rotor cage is fixedly mounted on the external surface of the rotor iron core. The said rotor iron core may be prepared by laminating and pressing conventional materials, for example the silicon steel stampings. Or, the said rotor iron core is the hollow cylindrical structure made from amorphous ferroalloy material. The radial external surface of the rotor iron core is matched with the copper or aluminum bar shapes of the said squirrel-cage. The copper bars or aluminum bars are embedded in the external surface of the rotor iron core, and fixedly mounted by virtue of the copper or aluminum rings at both ends. Keyway for connecting with the said electric machine shaft is also provided on the inner bore wall of the said rotor iron core.

An outer rotor electric machine according to the invention is defined in claim 8.

Amorphous ferroalloy material used by the stator iron core of the invention is the commercially available section-bar formed by winding an amorphous ferroalloy strip.

The rotor iron core of the invention is made from the commercially available section bar blank formed by winding an amorphous ferroalloy strip via processing.

The section bar formed by winding the amorphous ferroalloy strip may be adopted simultaneously as the radial magnetic circuit blank for the electric machine stator and the rotor.

A manufacturing method for the inner rotor electric machine according to the invention is defined in claims 9 - 13.

A manufacturing method for the outer rotor electric machine according to the invention is defined in claim 14.

As compared with the prior art, the beneficial effects of the slotless amorphous ferroalloy electric machine with radial magnetic circuit as well as the manufacturing method thereof are:

1. The adoption of the amorphous ferroalloy material as the radial magnetic circuit material for the stator of the electric machine, volume and loss of the electric machine are effectively reduced and efficiency is improved. Meanwhile, with the toothless and slotless design, processing difficulty of tooth slots is avoided, and man-hour is saved, and processing cost is greatly reduced, thus, cogging effect of the electric machine is avoided, electromagnetic noise is reduced and operation performance of the electric machine is improved.

2. Besides, amorphous ferroalloy material may be simultaneously adopted as the radial magnetic circuit material for the rotor of the electric machine, therefore, volume and loss of the electric machine are effectively reduced, and efficiency is improved.

3. With low eddy current loss, superior high frequency characteristic, low electromagnetic noise, high efficiency and power density, it is a electric machine of high efficiency and energy saving, whose mechanic-electric efficiency may be improved from 95% of the traditional electric machine to 97% or even more, thus, the unexpected effect is achieved and commercial successes is easily attainable.

### Description of figures

FIG. 1 shows a longitudinal sectional schematic diagram for the orthographic projection of the integral structure concerning the preferable embodiment "A Slotless Amorphous Ferroalloy Electric Machine with Radial Magnetic Circuit and Its Manufacturing Method" for the invention.
FIG. 2 shows a longitudinal sectional schematic diagram for the structure of the rotor 3 corresponding to said preferable embodiment.
FIG. 3 shows a cross sectional schematic diagram for the assembly of the rotor iron core 31 and the permanent magnets 32 corresponding to the said preferable embodiment.
FIG. 4 shows an A-A sectional view of FIG. 3.
FIG. 5 shows a longitudinal sectional schematic diagram for the rotor iron core 31 corresponding to the said preferable embodiment.
FIG. 6 shows a left view of FIG. 5.
FIG. 7 shows a sectional schematic diagram for the integral structure of the rotor 2 corresponding to the said preferable embodiment.
FIG. 8 shows a left viewed longitudinal sectional schematic diagram of FIG. 7.
FIG. 9 shows a cross sectional schematic diagram for the stator iron core 21.
FIG. 10 shows a left viewed longitudinal sectional schematic diagram of FIG. 9.
FIG. 11 shows a longitudinal sectional schematic diagram for the structure of the first insulation bobbin 23.
FIG. 12 shows a longitudinal sectional schematic diagram for the structure of the stator iron core 21 after two first insulation bobbins 23 are bonded.
FIG. 13 shows a longitudinal sectional schematic diagram for the structure of the second insulation bobbin 24.
FIG. 14 shows a longitudinal sectional schematic diagram for the orthographic projection of the integral structure corresponding to the embodiment that the invention is implemented on the outer rotor electric machine.

In the various figures of the drawings, designations of various numerals are as follows:
1. Shell; 2. Stator; 3. Rotor; 4. End cover; 5. Air gap; 6. Electric machine shaft; 7. Bearing; and 8. Snap ring. In the structure of the stator 2, 21 is the stator iron core, 22 is the stator winding, 23 is the first insulation bobbin, 231 is the (cylindrical) main body, 232 is the ring-shaped radial flange, 24 is the second insulation bobbin, 25 is the metal reinforcing sleeve; and in the structure of the rotor 3, 31 is the rotor iron core, 32 is the permanent magnets, 311 is the axial groove and 312 is the keyway.

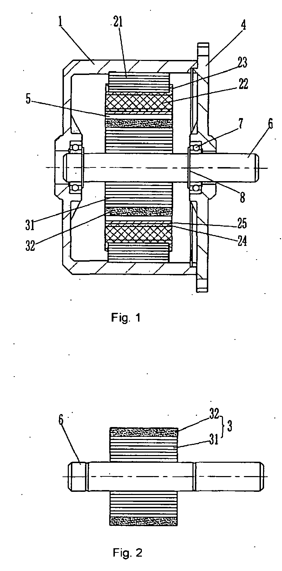

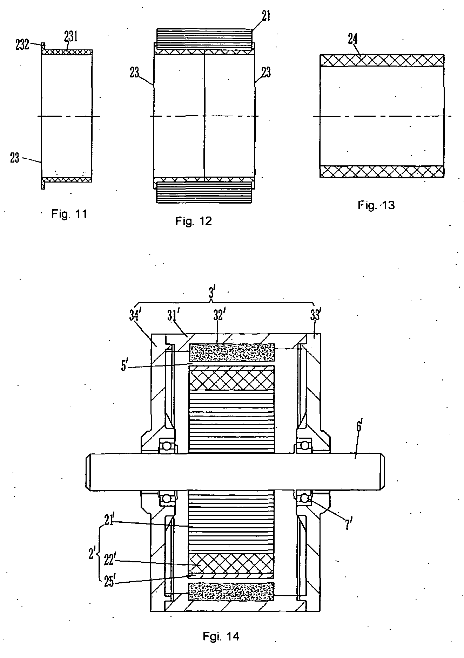

In the schematic diagram for the integral structure of the outer rotor electric machine corresponding to Figure 14, 2' is the stator, 3' is the outer rotor, 5 is the air gap, 6' is the electric machine bearing shaft, and 7' is the bearing; in the structure of the stator 2', 21' is the stator iron core, 22' is the stator winding, and 25' is the metal reinforcing sleeve; and in the structure of the rotor 3', 31' is the shell, 32' is the permanent magnets, 33' is the right end cover and 34' is the left end cover.

### Mode of carrying out the invention

Now, further detailed instructions will be made on the invention combining various attached drawings.

According to different forms of the rotor, inner rotor electric machine or outer rotor electric machine may be conceived for the invention.

When the invention is embodied in the inner rotor electric machine, see Figure 1: a slotless amorphous ferroalloy electric machine with radial magnetic circuit comprises: a shell 1, an end cover 4, a stator 2, a rotor 3 and an electric machine shaft 6. The end cover 4 is mounted at the end of the shell 1 and determines the mounting position of the electric machine shaft 6 together with the shell 1. The stator 2 is fixedly mounted inside the shell 1. The rotor 3 is fixedly mounted on the electric machine shaft 6 and arranged inside of the stator 2. A radial gap is arranged between the rotor 3 and the stator 2. The electric machine shaft 6 and the rotor 3 thereon pass through the inner capacity cavity of the stator 2, and rotatably mounted on the mounting position determined by the shell 1 and the end cover 4. For example, the electric machine shaft 6 may be rotatably mounted on the mounting position determined by the shell 1 and the end cover 4 by virtue of two bearings 7. The stator 2 includes the stator iron core 21 and the stator winding 22. The said stator iron core 21 is the cylinder formed by winding an amorphous ferroalloy strip. The said stator winding 22 is integrally in the shape of a cylinder and fixed on the internal cylindrical surface of the stator iron core 21. A metal reinforcing sleeve 25 is fixed on the internal wall of the stator winding 22. The axial length of the metal reinforcing sleeve 25 is identical to that of the stator winding 22. An air gap 5 is formed between the internal cylindrical surface of the metal reinforcing sleeve and the external surface of the said rotor 3.

In the first embodiment of the invention, the stator winding 22 is directly fixed on the internal wall of the said stator iron core 21, and the metal reinforcing sleeve 25 is fixed directly on the internal wall of the stator winding 22.

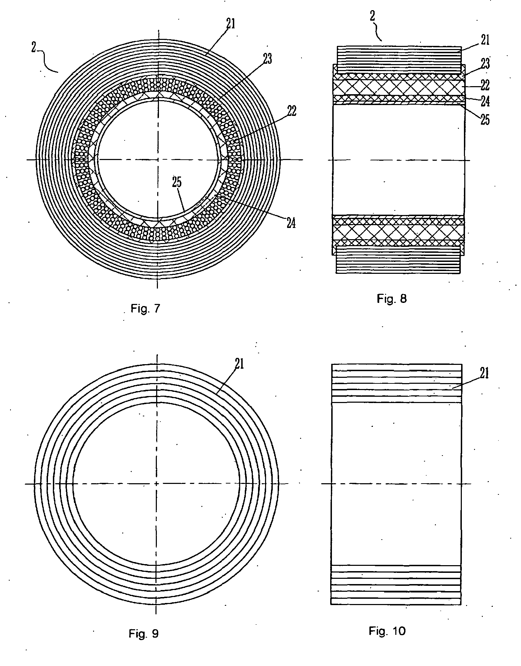

In the second embodiment of the invention, see Figure 1 and Figure 7 to Figure 13, internal wall of the said stator iron core 21 is installed with a first insulation bobbin 23. The main body 231 of the first insulation bobbin 23 is in the shape of a cylinder with one end surface therein set with a ring-shaped radial flange 232. One end which is not set with flange for the two identical first insulation bobbins 23 respectively are embedded from both ends of the inner capacity cavity of the stator iron core 21, butted against each other and fixed on the internal wall of the stator iron core 21. The ring-shaped radial flanges 232 at the end surfaces of the said two first insulation bobbins 23 are tightened against both ends of the inner capacity cavity of the stator iron core 21. The inner cavity of the said stator winding 22 is supported by a cylindrical second insulation bobbin 24 and fixed therein. The axial length of the second insulation bobbin 24 is identical to that of the stator winding 22. The internal wall of the said second insulation bobbin 24 is fixed on the external cylindrical surface of the metal reinforcing sleeve 25.

In the aforementioned various embodiments of the invention, the slotless amorphous ferroalloy electric machine with radial magnetic circuit is the brushless DC electric machine or AC synchronous electric machine, including DC or AC electromotor and generator. Meanwhile, it may also be AC asynchronous electric machine.

See Figure 1 and Figure 2, the rotor 3 stated by the invention includes the rotor iron core 31 and the permanent magnets 32. The said rotor iron core 31 may be made by laminating the conventional material, for example the silicon steel stampings; or, as shown by the technical solution of the invention, the said iron core 31 is the hollow structure made from amorphous ferroalloy material, with the radial external surface matched with the permanent magnets 32. The permanent magnets 32 are embedded in or sheathed outside of the external surface of the rotor iron core 31 and fixed. The keyway 312 for connecting with the said electric machine shaft 6 is provided on the inner bore wall of the said rotor iron core 31. The said permanent magnets 32 are neodymium-iron-boron alloy of high density of magnetic energy, or the strontium or barium ferrite.

See Figure 2, when the permanent magnets 32 are a hollow cylindrical permanent magnetic cylinder with multiple poles formed on the circumferential surface via magnetization, external surface of the section bar blank for the rotor iron core 31 is cylinder, with the outer diameter matched with the inner diameter of cylinder of the permanent magnets. Cylinders of the said permanent magnets are directly sheathed on the rotor iron core 31 and fixed.

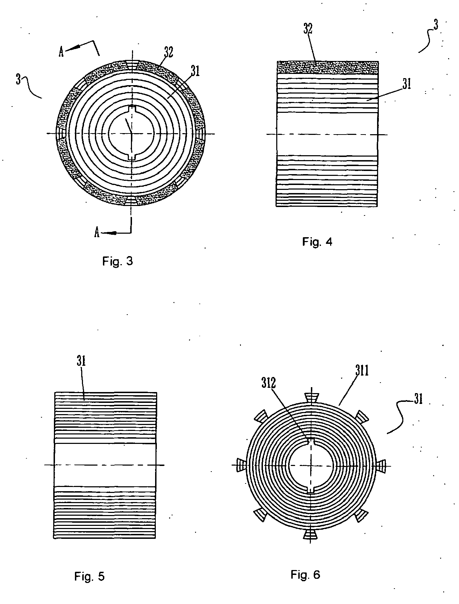

See Figure 3 to Figure 6, when the permanent magnets 32 are even-numbered tile-shaped sectional bars or "V" shaped sectional bar solids, the same amount of axial grooves 311 matched with the sectional shapes of all the permanent magnets 32 are provided on the external surface of the rotor iron core 31, and all the permanent magnets 32 shall be embedded into the grooves 311and fixed. The said axial grooves 311 may be dovetail grooves, and accordingly, the said permanent magnets 32 are with dovetail structures.

Or, when the invention is embodied in the AC asynchronous electric machine, the rotor as stated by the invention includes the rotor iron core 31 and the squirrel-cage thereon. The rotor iron core 31 is sheathed on the electric machine shaft 6. The said squirrel-cage is fixedly mounted on the external surface of the rotor iron core 31. The said rotor iron core 31 may be prepared by laminating conventional materials, for example the silicon steel stampings. Or, as shown by the technical solution of the invention, the said rotor iron core 31 is the hollow cylindrical structure made from amorphous ferroalloy material. The radial external surface of the rotor iron core 31 is matched with the copper or aluminum bar shapes of the said squirrel-cage. The copper bars or aluminum bars are embedded in the external surface of the rotor iron core 31, and fixedly amounted by virtue of the copper or aluminum rings at both ends. Keyway 312 for connecting with the said electric machine shaft 6 is also provided on the inner bore wall of the said rotor iron core 31.

When the invention is embodied in the outer rotor electric machine, see Figure 14, a slotless amorphous ferroalloy electric machine with radial magnetic circuit includes a stator 2', an outer rotor 3' and an electric machine bearing shaft 6' for mounting. The outer rotor 3' is arranged outside of the stator 2', comprising a shell 31', a left and right end cover 34' and 33', and permanent magnets 32'. The permanent magnets 32' are fixed on the internal wall of the shell 31', the left and right end covers 34' and 33' are fixedly mounted on the left and right end parts of the shell 31'. The outer rotor 3' is rotatably mounted on the electric machine bearing shaft 6', for example, the outer rotor 3' may be mounted on the electric machine bearing shaft 6' rotatably by virtue of two bearings 7'. The stator 2 ' is fixedly mounted on the electric machine bearing shaft 6', comprising a stator iron core 21' and a stator winding 22'. The said stator iron core 21' is the hollow cylindrical structure made from amorphous ferroalloy material. The said stator winding 22' is integrally in the shape of a cylinder and fixed on the external cylindrical surface of the stator iron core 21'. There is a metal reinforcing sleeve 25' on the radial external surface of the stator winding 22'. A radial air gap 5' is formed between the external cylindrical surface of the metal reinforcing sleeve 25' and the internal surface of the outer rotor 3'. Sheaves of conductive wire led from the stator winding 22' may be drawn out of the shell 31' along the surface groove on the electric machine bearing shaft 6' or along the channel inside the shaft according to the prior art method. The permanent magnets 32' are embedded in the internal surface of the shell 31' in the form of even-numbered bars, or directly fixed on the internal surface of the shell 31' in the hollow cylindrical shape. The shell 31' is rolled by steel plates or directly made of steel pipes.

In the various embodiments of the invention, the said "fix" refers to the fixation with the adhesives of which the level of resistance to heat are no lower than that of the insulation class for the said electric machine.

Accordingly, the manufacturing method for the slotless amorphous ferroalloy electric machine with radial magnetic circuit is also provided, which includes the steps as follows:
a. Preparation: a hollow cylindrical section bar formed by winding an amorphous ferroalloy strip is used as the blank of the stator iron core 21 and the rotor iron core 31.
b. Elaboration of the stator 2: first, prepare the stator winding 22, then by means of trimming, the required shape and size of the stator winding 22 are obtained. Now, choose to execute one of the following steps:
   b1. If a second insulation bobbin 24 is installed for the stator winding 22, the second insulation bobbin 24 shall be fixed on the internal cylindrical surface of the stator winding 22; then the metal reinforcing sleeve 25 shall be fixed on the internal wall of the second insulation bobbin 24.
   b2. If a second insulation bobbin 24 is not installed for the stator winding 22, then the internal cylindrical surface of the stator winding 22 shall be fixed directly on the metal reinforcing sleeve 25.

Besides, choose to execute one of the following steps again:
b3. If there is a first insulation bobbin 23 in the stator iron core 21, then the first insulation bobbin 23 shall be fixed on the internal wall of the stator iron core 21, and the external cylindrical surface of the stator winding 22 shall be fixed on the internal wall of the first insulation bobbin 23, thus, the elaboration of stator is completed.
b4. If the first insulation bobbin 23 is not installed for the stator iron core 21, then the stator winding 22 shall be fixed directly on the internal wall of the stator iron core 21, thus, the elaboration of stator is completed.
c. Elaboration of the rotor 3: keyway 312 used for connecting with the electric machine shaft 6 shall be processed on the inner bore wall of the hollow cylindrical section bar blank which is formed by winding an amorphous ferroalloy strip served as the rotor iron core 31, and choose to execute one of the following steps:
   c1. When the permanent magnets 32 are hollow cylindrical permanent magnetic cylinder with multiple magnetic poles formed on the circumferential surface via magnetization, attributable to the external cylindrical surface of the section bar blank for the rotor iron core 31, the rotor iron core 31 shall be embedded into the cylinder of the said permanent magnets 32 directly and fixed, and then the rotor shall be assembled;
   c2. When the permanent magnets 32 are even-numbered tile-shaped sectional bars or "V" shaped sectional bar solids, the same amount of axial grooves 311 matched with the sectional forms of all the permanent magnets 32 shall be provided on the external surface of the rotor iron core 31, and all the permanent magnets 32 shall be embedded into the axial grooves 311 and fixed. Then, the rotor shall be assembled.
   c3. When the rotor is of squirrel-cage structure, axial grooves which are matched with the axial copper or aluminum bar shapes of the said squirrel-cage shall be processed on the external surface of the rotor iron core 31. Copper or aluminum bars of the squirrel-cage are embedded into the external surface of the rotor iron core 31, fixedly mounted and welded by virtue of the copper or aluminum rings at both ends.
d. Load the stator 2 into the shell 1 and sheath the rotor 3 on the electric machine shaft 6 as per the routine operations, thus, the elaboration of the two components is completed;
e. Complete machine assembly: finish complete machine assembly for the electric machine as per the routine operations.

As another preferable embodiment of the manufacturing method for the invention, it relates to a manufacturing method for the slotless amorphous ferroalloy electric machine with radial magnetic circuit, which includes the steps as follows:
a. Preparation: a hollow cylindrical section bar formed by winding an amorphous ferroalloy strip with respectively satisfactory size is used to serve as the blank of the stator iron core 21 and the rotor iron core 31;
b. Elaboration of stator 2: first, use self-adhesive enamelled wire to prepare the stator winding 22 on the winding former, then by trimming with sizing die as well as heating and forming according to the heating standard of the self-adhesive enamelled wire, the required cylinder shape and size of the stator winding 22 are obtained. Bond the internal cylindrical surface of the stator winding 22 to the metal reinforcing sleeve 25 with adhesives in the sizing die for solidifying and forming. Then bond the external cylindrical surface of the stator winding 22 to the internal cylindrical surface of the stator iron core 21 with adhesive for solidifying. Then, baking for forming under the condition of 60 ∼ 100°C for 2-3h. Thus, elaboration of the stator is completed.
c. Elaboration of the rotor 3: keyway 312 used for connecting with the electric machine shaft 6 shall be processed on the inner bore wall of the hollow cylindrical section bar which is formed by winding an amorphous ferroalloy strip served as the rotor iron core 31, and choose to execute one of the following steps:
   c1. When the permanent magnets 32 are hollow cylindrical permanent magnet cylinder with multiple magnetic poles formed on the circumferential surface via magnetization, external surface of the steel bar blank for the rotor iron core 31 is the cylinder with the outer diameter matched with the inner diameter of the cylinder for the permanent magnets, embed the rotor iron core 31 directly into the said permanent magnet cylinder for bonding and solidifying, assemble the rotor, and bake for forming under the condition of 60-100°C for 2-3h;
   c2. When the permanent magnets 32 are even-numbered tile-shaped sectional bars or "V" shaped sectional bar solids, the same amount axial notches 311 matched with the sectional forms of the permanent magnets 32 shall be provided on the external surface of the rotor iron core 31, embed all the permanent magnets 32 into the axial grooves 311 for fixation, assemble the rotor for baking and forming under the condition of 60-100°C for 2-3h;
   c3. When the rotor is of squirrel-cage structure, axial grooves which are matched with the axial copper or aluminum bar shapes of the said squirrel-cage shall be processed on the external surface of the rotor iron core 31. Copper or aluminum bars of the squirrel-cage are embedded into the external surface of the rotor iron core 31, fixedly mounted and welded by virtue of the copper or aluminum rings at both ends, then, assemble the rotor;
d. Load the stator 2 into the shell 1 and sheath the rotor 3 onto the electric machine shaft 6 as per the routine operations, thus, the elaboration of the two components is completed;
e. Complete machine assembly: finish complete machine assembly for the electric machine as per the routine operations.

As yet another preferable embodiment of the manufacturing method for the present invention, it relates to a manufacturing method for the slotless amorphous ferroalloy electric machine with radial magnetic circuit, which includes the steps as follows:
a. Preparation: a hollow cylindrical section bar formed by winding an amorphous ferroalloy strip commercially available and satisfactory in size respectively is used as the blank of the stator iron core 21 and the rotor iron core 31;
b. Elaboration of the stator 2: first of all, prepare the stator winding 22 with self-adhesive enamelled wire on the winding former, then, by trimming with a sizing die and heating and forming according to the heating standard of the self-adhesive enamelled wire, the required cylinder shape and size of the stator winding 22 are obtained. Then, bond the second insulation bobbin 24 in the sizing die to the internal cylindrical surface of the stator winding 22 with adhesive for solidifying and forming, and bond the metal reinforcing sleeve 25 in the sizing die to the internal wall of the second insulation bobbin 24 with adhesives for solidifying and forming, next, one end which is not set with flange 232 for the two identical first insulation bobbins 23 respectively are embedded from both ends of the inner capacity cavity of the stator iron core 21, butted against each other, bonded and fixed to the internal wall of the stator iron core 21 with adhesives for forming. The ring flanges 232 at the end faces of the said two first insulation bobbins 23 are tightened against both ends of the inner capacity cavity of the stator iron core 21. Bond and solidify the stator winding package 22, 24 & 25 manufactured as per the above steps onto the two first insulation bobbin 23 on the internal wall of the said stator iron core 21 with adhesives. Finally, bake the complete stator 2 under the condition of 60-100°C for 2-3h for forming, thus the elaboration of the stator is completed;
c. Elaboration of the rotor 3: keyway 312 used for connecting with the electric machine shaft 6 shall be processed on the inner bore wall of the hollow cylindrical section bar blank which is formed by winding an amorphous ferroalloy strip served as the rotor iron core 31, and choose to execute one of the following steps:
   c1. When the permanent magnets 32 are hollow cylindrical permanent magnet cylinder with multiple magnetic poles formed on the cylindrical surface via magnetization, external surface of the steel bar blank for the rotor iron core 31 is cylinder with the outer diameter matched with the inner diameter of the cylinder for the permanent magnets, embed the rotor iron core 31 directly into the said permanent magnet cylinder for bonding and solidifying, assemble the rotor, and bake for forming under the condition of 60-100°C for 2-3h;
   c2. When the permanent magnets 32 are even-numbered tile-shaper sectional bars or "V" shaped sectional bar solids, the same amount axial notches 311 matched with the sectional forms of the permanent magnets 32 shall be provided on the external surface of the rotor iron core 31, embed all the permanent magnets 32 into these axial notches 311 for splicing and solidification, assemble the rotor for baking and forming under the condition of 60-100°C for 2-3h;
   c3. When the rotor is of squirrel-cage structure, axial grooves which are matched with the axial copper or aluminum bar shapes of the said squirrel-cage shall be processed on the external surface of the rotor iron core 31. Copper or aluminum bars of the squirrel-cage are embedded into the external surface of the rotor iron core 31, fixedly mounted by virtue of the copper or aluminum rings at both ends, then, assemble the rotor.
d. Load the stator 2 into the shell 1 and sheath the rotor 3 onto the electric machine shaft 6 as per the routine operations, thus, the elaboration of the two components is completed;
e. Complete machine assembly: finish complete machine assembly for the electric machine as per the routine operations.

For the outer rotor electric machine, manufacturing method for the slotless amorphous ferroalloy outer rotor electric machine with radial magnetic circuit is also provided accordingly, which includes the steps as follows:
a. Preparation: a hollow cylindrical section bar formed by winding an amorphous ferroalloy strip is used as the blank of the stator iron core 21';
b. Elaboration of stator: keyway used for connecting the electric machine shaft shall be processed on the inner bore surface of the stator iron core 21 ', prepare the stator winding 22', then by means of trimming, the required shape and size of the stator winding 22' are obtained. The external cylindrical surface of the stator winding 22' shall be fixed directly into the metal reinforcing sleeve 25'. The stator winding 22' shall be sheathed and fixed on the external cylindrical surface of the stator iron core 21'. The stator iron core 21' and the electric machine shaft 6' shall be connected and fixed with keys, and two bearings 7' shall be mounted for the electric machine bearing shaft 6', thus the elaboration of the stator is completed.
c. Elaboration of rotor: even-numbered bars or hollow cylindrical permanent magnets 32' shall be made. Roll the steel plate into shell 31' or use the steel pipe directly as the shell 31'. Shapes matched with the permanent magnets 32' to be fixed shall be processed on the internal wall of the shell 31'. Permanent magnets 32' shall be embedded into and fixed on the internal wall of the shell 31', and the rotor shall be assembled.
d. Finish complete machine assembly for the electric machine as per the routine operations.

In various embodiments of the present invention, the amorphous ferroalloy material used by the said stator iron core 21 and rotor iron core 31 adopts the section bar and section bar blank, which is manufactured by winding the nanosized iron-based amorphous ferroalloy strip produced by Advanced Technology & Materials Co., Ltd., People's Republic of China.

In various embodiments of the present invention, adhesives for bonding all components of the said stator 2 as well as for bonding the rotor iron core 31 to the permanent magnets 32 are the adhesives with level of resistance to heat no lower than that of the insulation class for the said electric machine. In various embodiments of the invention, the ESP110 resin produced by Henkel Corporation (U.S.A.) and two-component 3034A & 3034B epoxy resin of high-strength, resistance to high-temperature 200°C, manufactured by Langbowan Company are adopted. And the adhesive operations are executed as per requirements by the prior art related to adhesives.

## Claims

1. A slotless amorphous ferroalloy electric machine with radial magnetic circuit, comprising: a shell (1), an end cover (4), a stator (2), a rotor (3) and an electric machine shaft (6); the end cover is mounted to the end of the shell and determines the mounting position of the electric machine shaft together with the shell; the stator is fixedly mounted to the inside of the shell; the rotor is fixedly mounted onto the electric machine shaft and arranged inside of the stator; a radial air gap is arranged between the rotor and the stator; the electric machine shaft and the rotor thereon pass through the internal capacity cavity of the stator, rotatably mounted to the mounting positions determined by the shell and the end cover; the stator consists of a stator iron core (21) and a stator winding (22); the said stator iron core is a cylinder formed by winding an amorphous ferroalloy strip; the said stator winding is integrally in the shape of a cylinder and fixed on the internal cylindrical surface of the stator iron core;
**characterized in that:**
a metal reinforcing sleeve (25) is fixed on the internal surface of the stator winding (22);
the axial length of the metal reinforcing sleeve is identical to that of the stator winding; a radial air gap (5) is arranged between the internal cylindrical surface of the metal reinforcing sleeve and the external surface of the said rotor.

2. The slotless amorphous ferroalloy electric machine with radial magnetic circuit as stated in claim 1, further **characterized in that**: the said rotor (3) consists of a rotor iron core (31) and permanent magnets (32); the said rotor iron core is a hollow cylindrical structure made of amorphous ferroalloy material; the radial external surface of the rotor iron core is matched with the permanent magnets; the permanent magnets are embedded on or sheathed outside of the external surface of the rotor iron core and fixed thereon.

3. The slotless amorphous ferroalloy electric machine with radial magnetic circuit as stated in claim 2, further **characterized in that**: the inner bore wall of the said rotor iron core (31) is provided with keyway used for connecting with the said electric machine shaft (6).

4. The slotless amorphous ferroalloy electric machine with radial magnetic circuit as stated in claim 1, further **characterized in that**: the said rotor (3) includes a rotor iron core and a squirrel-cage on its surface; the rotor iron core is sheathed onto the electric machine shaft; the said squirrel-cage is fixedly mounted onto the external surface of the rotor iron core, assembled into an AC asynchronous machine; the said rotor iron core (31) is a hollow cylindrical structure made of amorphous ferroalloy material, whose radial external surface is matched with the shape of the axial copper bar or aluminum bar of the said squirrel-cage; the copper bars or aluminum bars are embedded in the external surface of the rotor iron core and fixedly mounted by virtue of the copper rings or aluminum rings at both ends.

5. The slotless amorphous ferroalloy electric machine with radial magnetic circuit as stated in claim 4, further **characterized in that**: the inner bore wall of the said rotor iron core (31) is provided with keyway used for connecting with the said electric machine shaft (6).

6. The slotless amorphous ferroalloy electric machine with radial magnetic circuit as stated in any one of claim 1 to 5, further **characterized in that**: the internal wall of the said stator iron core (21) is installed with first insulation bobbins (23); the main body of the first insulation bobbin is in the shape of a cylinder with one end surface therein fixed with a ring-shaped radial flange (232); but the another ends which are not set with flanges for the two identical first insulation bobbins respectively are embedded from both ends of the inner capacity cavity of the stator iron core, butted against each other and fixed to the internal wall of the stator iron core; the ring-shaped radial flanges at the end surfaces of the said two first insulation bobbins are tightened against both ends of the inner capacity cavity of the stator iron core.

7. The slotless amorphous ferroalloy electric machine with radial magnetic circuit as stated in claim 6, further **characterized in that**: the inner cavity of the said stator winding is supported by a cylinder-shaped second insulation bobbin (24) and fixed therein; the axial length of the second insulation bobbin is identical to that of the stator winding (22); the internal wall of the said second insulation bobbin is fixed on the external cylindrical surface of the metal reinforcing sleeve (25).

8. A slotless amorphous ferroalloy electric machine with radial magnetic circuit comprises a stator (2'), an outer rotor (3') and an electric machine bearing shaft (6') for mounting; the outer rotor (3') is arranged outside of the stator (2'), comprising a shell (31'), left and right end covers (34',33') and permanent magnets (32'); wherein the permanent magnets are embedded in the internal surface of the shell in the shape of even-numbered bars, or directly fixed on the internal surface of the shell in the shape of hollow cylinder, the left and right end covers are fixed on the left and right ends of the shell, and the outer rotor is rotatably mounted on the electric machine bearing shaft; the stator is fixedly mounted on the electric machine bearing shaft, comprising the stator iron core (21') and the stator winding (22'); the said stator iron core is a hollow cylindrical structure made of amorphous ferroalloy material; the said stator winding is integrally in the shape of a cylinder and fixed on the external cylindrical surface of the stator iron core
**characterized in that:**
a metal reinforcing sleeve (25') is fixed on the radial external of the stator winding (22');
the axial length of the metal reinforcing sleeve is identical to that of the stator winding; a radial air gap is arranged between the external cylindrical surface of the metal reinforcing sleeve and the external surface of the said rotor.

9. A manufacturing method for a slotless amorphous ferroalloy electric machine with radial magnetic circuit, comprising the steps as follows:
a. Preparation: a hollow cylindrical section bar formed by winding an amorphous ferroalloy strip is used as the blank of the stator iron core (21) and the rotor iron core (31);
b. Elaboration of the stator (2): first, prepare the stator winding (22), then by means of trimming, the required shape and size of the stator winding are obtained; now, choose to execute one of the following steps b1 or b2:
b1. If a second insulation bobbin (24) is installed for the stator winding (22), the second insulation bobbin shall be fixed on the internal cylindrical surface of the stator winding; then the metal reinforcing sleeve (25) shall be fixed on the internal wall of the second insulation bobbin;
b2. If a second insulation bobbin (24) is not installed for the stator winding, then the internal cylindrical surface of the stator winding (22) shall be fixed directly on the metal reinforcing sleeve (25);
wherein the metal reinforcing sleeve (25) of steps b1 or b2 has an axial length that is identical to that of the stator winding;
Besides, choose to execute one of the following steps b3 or b4 again:
b3. If there is a first insulation bobbin (23) in the stator iron core, then the first insulation bobbin shall be fixed on the internal wall of the stator iron core (21), and the external cylindrical surface of the stator winding (22) shall be fixed on the internal wall of the first insulation bobbin (23), thus, the elaboration of stator is completed;
b4. If the first insulation bobbin (23) is not installed for the stator iron core, then the stator winding (22) shall be fixed directly on the internal wall of the stator iron core (21), thus, the elaboration of stator is completed.

10. The manufacturing method for a slotless amorphous ferroalloy electric machine with radial magnetic circuit as stated in claim 9, further comprising the steps as follows:
in step b use self-adhesive enamelled wire to prepare the stator winding (22) on the winding former, then by trimming with sizing die as well as heating and forming according to the heating standard of the self-adhesive enamelled wire, the required cylindrical shape and size of the stator winding are obtained;
choose to execute step b2 and bond the internal cylindrical surface of the stator winding (22) to the metal reinforcing sleeve (25) with adhesives in the sizing die for solidifying and forming;
choose to execute step b4 and bond the external cylindrical surface of the stator winding (22) to the internal cylindrical surface of the stator iron core (21) with adhesives for solidifying; then, baking and forming under the condition of 60 - 100°C for 2-3h, so that elaboration of the stator is completed.

11. The manufacturing method for a slotless amorphous ferroalloy electric machine with radial magnetic circuit as stated in claim 9, further comprising the steps as follows:
in step b: prepare the stator winding (22) with self-adhesive enamelled wire on the winding former, then, by trimming with a sizing die and heating and forming according to the heating standard of the self-adhesive enamelled wire, the required cylindrical shape and size of the stator winding are obtained;
then choose to execute step b1 and bond the second insulation bobbin (24) in the sizing die to the internal cylindrical surface of the stator winding (22) with adhesives for solidifying and forming, and bond the metal reinforcing sleeve (25) in the sizing die to the internal wall of the second insulation bobbin (24) with adhesives for solidifying and forming,
next choose to execute step b3 and one end which is not set with flange (232) for the two identical first insulation bobbins (23) respectively are embedded from both ends of the inner capacity cavity of the stator iron core (21), butted against each other, bonded and fixed to the internal wall of the stator iron core with adhesives for forming; the ring flanges (232) at the end faces of the said two first insulation bobbins (23) are tightened against both ends of the inner capacity cavity of the stator iron core (21); bond and solidify the stator winding package (22,24,25) manufactured as per the above steps onto the two first insulation bobbin (23) on the internal wall of the said stator iron core with the adhesive; finally, bake the complete stator under the condition of 60 - 100°C for 2 - 3h for forming, so that the elaboration of the stator is completed

12. The manufacturing method for a slotless amorphous ferroalloy electric machine with radial magnetic circuit as stated in claims 10 or 11, further comprising the steps as follows:
c. Elaboration of the rotor (3): keyway used for connecting with the electric machine shaft (6) shall be processed on the internal wall of the hollow cylindrical section bar which is formed by winding an amorphous ferroalloy strip used to serve as the blank for the rotor iron core (31), and choose to execute one of the following steps c1 - c3:
c1. When the permanent magnets (32) are hollow cylindrical permanent magnet cylinder with multiple magnetic poles formed on the cylindrical surface via magnetization, external surface of the section bar blank for the rotor iron core (31) is the cylinder with the outer diameter matched with the inner diameter of the cylinder for the permanent magnets (32), embed the rotor iron core directly into the said permanent magnet cylinder for bonding and solidifying, assemble the rotor, and bake for forming under the condition of 60 - 100°C for 2 - 3h;
c2. When the permanent magnets are even-numbered tile-shaped sectional bars or "V" shaped sectional bar solids, the same amount axial grooves matched with the sectional forms of the permanent magnets shall be provided on the external surface of the rotor iron core (31), embed all the permanent magnets (32) into these axial grooves for bonding and solidifying, assemble the rotor for baking and forming under the condition of 60 - 100°C for 2 - 3h;
c3. When the rotor is of squirrel-cage structure, axial grooves which are matched with the axial copper or aluminum bar shapes of the said squirrel-cage shall be processed on the external surface of the rotor iron core (31); copper or aluminum bars of the squirrel-cage are embedded into the external surface of the rotor iron core, fixedly mounted by virtue of the copper or aluminum rings at both ends, then, assemble the rotor;
d. Load the stator (2) into the shell (1) and sheath the rotor (3) onto the electric machine shaft (6) so that the elaboration of the two components is completed;
e. Complete machine assembly: finish complete machine assembly for the electric machine.

13. The manufacturing method for a slotless amorphous ferroalloy electric machine with radial magnetic circuit as stated in claims 10, 11 or 12, wherein the adhesives for bonding all components of the said stator (2) as well as for bonding the rotor iron core (31) with the permanent magnets (32) are the adhesives with level of resistance to heat no lower than that of the insulation class for the said electric machine.

14. A manufacturing method for the slotless amorphous ferroalloy electric machine with radial magnetic circuit, comprising the steps as follows:
a. Preparation: a hollow cylindrical section bar formed by winding an amorphous ferroalloy strip is used as the blank of the stator iron core (21');
b. Elaboration of stator: keyway used for connecting the electric machine shaft shall be processed on the inner bore surface of the stator iron core (21'), stator winding (22') shall be prepared, then by means of trimming, the required shape and size of the stator winding are obtained; the external cylindrical surface of the stator winding shall be fixed directly into the metal reinforcing sleeve (25'); the stator winding shall be sheathed and fixed on the external cylindrical surface of the stator iron core (21'); the stator iron core and the electric machine shaft (6') shall be connected and fixed with keys, and two bearings shall be mounted for the electric machine bearing shaft, thus the elaboration of the stator (2') is completed;
wherein the metal reinforcing sleeve (25') has an axial length that is identical to that of the stator winding (22');
c. Elaboration of rotor (3'): even-numbered bars or hollow cylindrical permanent magnets (32') shall be made; roll the steel plate into shell or use the steel pipe directly as the shell (31'); shapes matched with the to-be-fixed permanent magnets (32') shall be processed on the internal wall of the shell (31'); permanent magnets (32') shall be embedded into and fastened with the internal wall of the shell (31'), and the rotor shall be assembled;
d. Finish complete machine assembly for the electric machine.

## Patentansprüche

1. Elektromotor aus nutfreier amorpher Eisenlegierung mit radialem magnetischem Kreis, umfassend: ein Gehäuse (1), eine Endabdeckung (4), einen Stator (2), einen Rotor (3) und eine Elektromotorwelle (6); wobei die Endabdeckung an das Gehäuseende montiert ist und die Montageposition der Elektromotorwelle zusammen mit dem Gehäuse festlegt; wobei der Stator fest mit der Innenseite des Gehäuses verbunden ist; wobei der Rotor fest mit der Elektromotorwelle verbunden und innerhalb des Stators angeordnet ist; wobei ein radialer Luftspalt zwischen dem Rotor und dem Stator vorgesehen ist; wobei die Elektromotorwelle und der darauf vorgesehene Rotor durch den inneren, zur Aufnahme bereit gestellten Hohlraum des Stators verlaufen und an den Montagepositionen drehbar befestigt sind, welche von dem Gehäuse und der Endabdeckung festgelegt sind; wobei der Stator einen Statoreisenkern (21) und eine Statorwicklung (22) umfasst; wobei der Statoreisenkern ein Zylinder ist, welcher durch Aufwickeln eines amorphen Streifens aus einer Eisenlegierung gebildet ist; wobei die Statorspule als Ganzes die Form eines Zylinders hat und auf der inneren zylindrischen Oberfläche des Statoreisenkerns fixiert ist;
**dadurch gekennzeichnet, dass**
eine Metallverstärkungshülse (25) auf der inneren Oberfläche der Statorspule (22) befestigt ist; wobei die axiale Länge der Metallverstärkungshülse zu derjenigen der Statorspule identisch ist; wobei ein radialer Luftspalt (5) zwischen der inneren zylindrischen Oberfläche der Metallverstärkungshülse und der Außenfläche des Rotors vorgesehen ist.

2. Elektromotor aus nutfreier amorpher Eisenlegierung mit radialem magnetischem Kreis nach Anspruch 1, **dadurch gekennzeichnet, dass** der Rotor (31) einen Rotoreisenkern (31) und Permanentmagnete (32) umfasst; wobei der RotorEisenkern eine hohle zylindrische Struktur aus amorpher Eisenlegierung aufweist; wobei die radiale Außenfläche des Rotoreisenkerns mit den Permanentmagneten abgestimmt ist; wobei die Permanentmagnete eingebettet sind auf oder außerhalb der Außenfläche des Rotoreisenkerns ummantelt und darauf fixiert sind.

3. Elektromotor aus nutfreier amorpher Eisenlegierung mit radialem magnetischem Kreis nach Anspruch 2, **dadurch gekennzeichnet, dass** die innere Bohrungswand des Rotoreisenkerns (31) mit einer Schlüsselnut versehen ist, welche zur Verbindung mit der Elektromotorwelle (6) verwendet wird.

4. Elektromotor aus nutfreier amorpher Eisenlegierung mit radialem magnetischem Kreis nach Anspruch 1, **dadurch gekennzeichnet, dass** der Rotor (3) einen Rotoreisenkern und einen Käfig an seiner Oberfläche umfasst; wobei der Rotoreisenkern die Elektromotorwelle ummantelt; wobei der Käfig auf der Außenfläche des Rotoreisenkerns fest angebracht ist, um eine AC-Asynchronmaschine zusammenzusetzen; wobei die Rotoreisenkern die Struktur eines Hohlzylinders aus amorpher Eisenlegierung aufweist, dessen radial äußere Oberfläche mit der Form der axialen Kupferschiene oder des Aluminiumstabs des Käfigs abgestimmt ist; wobei die Kupferschienen oder Aluminiumstäbe in der Außenfläche des Rotoreisenkerns eingebettet und mittels der Kupferringe oder Aluminiumringe an beiden Enden fest gelagert sind.

5. Elektromotor aus nutfreier amorpher Eisenlegierung mit radialem magnetischem Kreis nach Anspruch 4, **dadurch gekennzeichnet, dass** die innere Bohrungswand des Rotoreisenkerns mit einer Schlüsselnut zur Verbindung mit der Elektromotorwelle (6) versehen ist.

6. Elektromotor aus nutfreier amorpher Eisenlegierung mit radialem magnetischem Kreis nach einem der Ansprüche 1 bis 5, **dadurch gekennzeichnet, dass** an der Innenwand des Statoreisenkerns (21) erste Isolationsspulen angebracht sind; wobei der Hauptkörper der ersten Isolationsspule die Form eines Zylinders aufweist, wobei eine Stirnfläche desselben mit einem ringförmigen radialen Flansch (232) befestigt ist; wobei die anderen Enden, die für die beiden identischen ersten Isolationsspulen nicht mit Flanschen befestigt sind, von beiden Enden des inneren Kapazitätshohlraums des Statoreisenkerns eingebettet, aneinander gedrückt und an der Innenwand des Statoreisenkerns befestigt sind; wobei die ringförmigen radialen Flansche an den Stirnflächen der beiden ersten Isolationsspulen gegen beide Enden des Innenkapazitätshohlraums des Statoreisenkerns angezogen sind.

7. Elektromotor aus nutfreier amorpher Eisenlegierung mit radialem magnetischem Kreis nach Anspruch 6, **dadurch gekennzeichnet, dass** der innere Hohlraum der Statorwicklung mit einer zylinderförmigen zweiten Isolationsspule (24) gelagert ist und darin befestigt; wobei die axiale Länge der zweiten Isolationsspule mit derjenigen der Statorwicklung (22) identisch ist; wobei die Innenwand der zweiten Isolationsspule auf der äußeren zylindrischen Oberfläche der Metallverstärkungshülse (25) befestigt ist.

8. Elektromotor aus nutfreier amorpher Eisenlegierung mit radialem magnetischem Kreis umfasst einen Stator (2'), einen Außenrotor (3') und eine Elektromotorwelle (6) für die Montage; wobei der äußere Rotor (3') außerhalb des Stators (2') angeordnet ist, welcher mit eine Gehäuse (31'), linke und rechte Abdeckungen (34, 33') und Permanentmagnete (32') umfasst; wobei die Permanentmagnete in die Innenwand des Gehäuses nach Art von geradzahligen Stäben eingebettet oder direkt auf der Innenwand des Gehäuses in Form von Hohlzylindern fixiert sind, wobei die linken und rechten Endabdeckungen an den linken und rechten Enden des Gehäuses befestigt sind, und wobei der äußere Rotor drehbar an der Elektromotorwelle montiert ist; wobei der Stator, welcher fest an der Elektromotorwelle montiert ist, den Statoreisenkern (21') und die Statorwicklung (22'), wobei der Statoreisenkern eine hohle zylindrische Struktur aus amorpher Eisenlegierung aufweist, **dadurch gekennzeichnet, dass** eine Metallverstärkungshülse (25') auf der radialen Außenfläche der Statorwicklung (22') befestigt ist; wobei die axiale Länge der Metallverstärkungshülse mit derjenigen der Statorwicklung identisch ist; wobei ein radialer Luftspalt zwischen der zylindrischer Außenfläche der Metallverstärkungshülse und der Außenfläche des Rotors angeordnet ist.

9. Herstellungsverfahren für einen Elektromotor aus nutfreier amorpher Eisenlegierung mit radialem magnetischem Kreis, umfassend die folgenden Verfahrensschritte:
a. Vorbereiten: Ein zylindrischer Hohlprofilstab, welcher durch Wicklung eines amorphen Eisenlegierungstreifens ausgebildet ist, wird als Rohling des Statoreisenkerns (21) und des Rotoreisenkerns (31) verwendet;
b. Ausarbeiten des Stators (2): Erstens, Vorbereiten der Statorwicklung (22), dann wird durch Trimmen die gewünschte Form und Größe der Statorwicklung erhalten; inzwischen wird die Ausführung eines der folgenden Schritte b1 oder b2 gewählt;
b1. Wenn eine zweite Isolationsspule (24) für die Statorwicklung (22) eingesetzt wird, ist die zweite Isolationsspule auf der zylindrischen Innenfläche der Statorwicklung zu befestigt; dann ist die Metallverstärkungshülse (25) auf der Innenwand der zweiten Isolationsspule zu befestigen;
b2. Wenn keine zweite Isolationsspule (24) für die Statorwicklung eingesetzt wird, dann ist die zylindrische Innenfläche der Statorwicklung (22) direkt auf der Metallverstärkungshülse (25) zu befestigen;
wobei die Metallverstärkungshülse (25) nach Schritt b1 oder b2 eine axiale Länge aufweist, welche derjenigen der Statorwicklung identisch ist;
weiterhin ist unter den folgenden Schritten b3 oder b4 zu wählen:
b3: Wenn im Statoreisenkern eine erste Isolationsspule (23) eingesetzt wird, dann ist die erste Isolationsspule an der Innenwand des Statoreisenkerns (21) zu befestigen und die zylindrischen Außenfläche der Statorwicklung ist an der Innenwand der ersten Isolationsspule (23) zu befestigt, somit ist die Montage des Stators abgeschlossen;
b4: Wenn im Statoreisenkern keine erste Isolationsspule (23) eingesetzt wird, dann ist die Statorwicklung direkt an der Innenwand des Statoreisenkerns (21) zu fixieren, somit ist die Montage des Stators abgeschlossen.

10. Herstellungsverfahren für einen Elektromotor aus nutfreier amorpher Eisenlegierung mit radialem magnetischem Kreis nach Anspruch 9, ferner umfassend folgende Verfahrensschritte:
In Schritt b: Verwenden von selbstklebendem Lackdraht, um die Statorwicklung (22) auf dem Wickelkörper herzustellen, dann wird mittels Trimmen mit Leimungsmitel sowie durch Erhitzen und Formen entsprechend dem Erhitzungsstandard des selbstklebenden Lackdrahts die Statorwicklung mit erforderlicher zylindrischer Form und Größe gewonnen; es wird gewählt, Schritt b2 auszuführen, und die zylindrische Innenfläche der Statorwicklung (22) wird an der Metallverstärkungshülse (25) mittels Klebstoffen in der Kalibrierdüse zum Verfestigen und Formen verbunden; dann wird Schritt b4 gewält und die zylindrische Außenfläche der Statorwicklung (22) mit der zylindrischen Innenfläche des Statoreisenkerns mittels Klebstoffen zum Verfestigen verbunden; dann Erhitzen und Ausformen unter den Bedingungen von 60 ∼ 100°C für 2-3 h, so dass die Montage des Stators vervollständig ist.

11. Herstellungsverfahren für einen Elektromotor aus nutfreier amorpher Eisenlegierung mit radialem magnetischem Kreis nach Anspruch 9, ferner umfassend folgende Verfahrensschritte:
In Schritt b: Vorbereiten der Statorwicklung (22) durch Aufbringen von selbstklebendem Lackdraht auf dem Wickelkörper, dann wird durch Trimmen mittels eines Kalibrierwerkzeugs sowie durch Erhitzen und Formen entsprechend dem Erhitzungsstandard des selbstklebenden Lackdrahts die Statorwicklung mit erforderlicher zylindrischer Form und Größe gewonnen; es wird gewählt, Schritt b1 auszuführen, und die zweite Isolationsspule (24) im Kalibrierwerkzeug mit der zylindrischen Innenfläche der Statorwicklung (22) mittels Klebstoffen zum Verfestigen und Formen zu verbinden; und die Metallverstärkungshülse (25) im Kalibrierwerkzeug mit der Innenwand der zweiten Isolationsspule (24) mittels Klebstoffen zum Verfestigen und Formen zu verbinden;
dann wird Schritt b3 gewählt und wobei die Enden, die für die beiden identischen ersten Isolationsspulen (23) nicht mit Flanschen (232) befestigt sind, von beiden Enden des inneren Kapazitätshohlraums des Statoreisenkerns (21) eingebettet,
aneinander gedrückt, verbunden und an der Innenwand des Statoreisenkerns mittels Klebstoff befestigt werden; die Ringflansche (232) an den Stirnseiten der beiden ersten Isolationsspulen (232) werden gegen beide Enden des inneren Kapazitätshohlraums des Statoreisenkerns (21) gedrückt; Verbinden und Verfestigen des Statorwicklungspakets (22, 24, 25) gemäß den obigen Schritten mittels Klebstoff auf die beiden ersten Isolationsspulen (23) an der Innenwand des Statoreisenkerns;
abschließend Erhitzen des kompletten Stators unter der Bedingung von 60 bis 100°C für 2 - 3 h zum Ausormen, wodurch die Montage des Stators abgeschlossen ist.

12. Herstellungsverfahren für einen Elektromotor aus nutfreier amorpher Eisenlegierung mit radialem magnetischem Kreis nach Anspruch 10 oder 11, ferner umfassend folgende Verfahrensschritte:
c. Verarbeiten des Rotors: eine Keilnut zum Verbinden mit der Elektromotorwelle (6) wird auf der Innenwand des zylindrischen Hohlprofilstabs verarbeitet, welcher durch Wicklung eines amorphen Eisenlegierungstreifens ausgebildet ist, um als Rohling des Rotoreisenkerns (31) verwendet zu werden, und Auswählen der Durchführung eines der Schritte c1 bis c3:
c1. Wenn die Permanentmagnete (32) zylindrische Dauermagnethohlzylinder mit mehreren Magnetpole sind, auf der Zylinderoberfläche via Magnetisierung ausgebildet sind, ist die Außenfläche des Profilstabrohlings des Rotoreisenkerns (31) auf den Zylinder zurückzuführen ist, dessen Außendurchmesser mit dem Innendurchmesser des Zylinders für die Permanentmagnete (32) übereinstimmt, werden der Rotoreisenkern zum Verbinden und Verfestigen direkt in den Permanentmagnetenzylinder eingebettet, der Rotor montiert und zum Ausformen unter der Bedingung von 60 ∼ 100°C für 2 bis 3 h erhitzt;
c2. Wenn Permanentmagnete geradzahlige plattenförmigen Profilstäbe oder "V"-förmige Profilstabfestkörper sind, so wird die gleiche Menge an axialen Nuten, die mit den Querschnittsformen aller Permanentmagnete abgestimmt sind, auf der Außenfläche des Rotoreisenkerns (31) vorgesehen, wobei zum Verbinden und Befestigen alle Permanentmagnete (32) in die axialen Nuten eingebettet sind, wobei der Rotor montiert und zum Ausformen unter der Bedingung von 60 ∼ 100°C für 2 bis 3 h erhitzt wird;
c3. Wenn sich der Rotor eine Käfigläufer ist, werden axiale Nuten, welche mit den axialen Kupfer- oder Aluminiumstäben des Käfigläufers abgestimmt sind, auf der Außenfläche des Rotoreisenkerns (31) verarbeitet; Kupfer- oder Aluminiumstäbe des Käfigläufers werden in die Außenfläche des Rotoreisenkerns eingebettet, unter Vernwendung der Kupfer- oder Aluminiumringe an beiden Enden fest montiert, dann wird der Rotor montiert;
d. Laden des Stators (2) in das Gehäuse (1) und Ummandetln der Elektromotorwelle mit dem Rotor (3), so dass die Erstellung der beiden Bauteile abgeschlossen ist;
e. Komplette Elektromotormontage: Abschließen der kompletten Elektromotormontage des Elektromotors.

13. Herstellungsverfahren für einen Elektromotor aus nutfreier amorpher Eisenlegierung mit radialem magnetischem Kreis nach Anspruch 10, 11 oder 12, wobei die Klebstoffe zur Verklebung aller Komponenten in dem Stator (2) sowie zum Verbinden des Rotoreisenkerns (31) mit den Permanentmagneten (32) Klebstoffe mit Hitzerbeständigkeit sind, die nicht geringer ist als beim Schutzgrad, der dem Elektromotor zugewiesen ist.

14. Herstellungsverfahren für einen Elektromotor aus nutfreier amorpher Eisenlegierung mit radialem magnetischem Kreis, umfassend die folgenden Verfahrensschritte:
a. Vorbereiten: Ein zylindrischer Hohlprofilstab, welcher durch Wicklung eines amorphen Eisenlegierungstreifens ausgebildet ist, wird als Rohling des Statoreisenkerns (21') verwendet;
b. Ausarbeiten des Stators (2): eine Keilnut zum Verbinden mit der Elektromotorwelle (6) wird auf der Innenwand des zylindrischen Hohlprofilstabs (21') verarbeitet, die Statorwicklung (22') wird verarbeitet, dann wird mittels Trimmen die Statorwicklung mit erforderlicher Form und Größe gewonnen; wobei die zylindrischen Außenfläche der Statorwicklung direkt in der Metallverstärkungshülse (25) zu fixieren ist, wobei die Statorwicklung den Statoreisenkern (21') auf dessen zylindrischer Außenfläche ummantelt und daran fixiert wird; wobei der Statoreisenkern und die Elektromotorwelle (6') miteinander verbunden und mit Führungsnasen fixiert werden, wobei die beiden Lager an der Elektromotorlagerwelle montiert werden, und somit die Montage des Stators (2') abgeschlossen ist;
wobei die Metallverstärkungshülse (25') eine axiale Länge hat, welche mit derjenigen der Statorwicklung (22') identisch ist;
c. Verarbeiten des Rotos (3'): Geradzahlige Stäbe oder hohlzylinderförmige Permanentmagnete (32') werden hergestellt; Einwalzen der Stahlplatte in das Gehäuse oder direkte Verwendung des Stahlrohrs als Gehäuse (31'); Formen, welche mit den zu fixierenden Permanentmagneten (32') abgestimmt sind, sind an der Innenwand des Gehäuses (31') einzuarbeiten; die Permanentmagnete (32') sind an der Innenwand des Gehäuses (31') einzubetten und zu fixieren, und der Rotor wird montiert;
d. Abschließen der kompletten Elektromotormontage des Elektromotors.

## Revendications

1. Machine électrique à ferroalliage amorphe sans fente pourvue d'un circuit magnétique radial, comprenant : une coque (1), un couvercle d'extrémité (4), un stator (2), un rotor (3) et un arbre de machine électrique (6) ; le couvercle d'extrémité est monté à l'extrémité de la coque et détermine la position de montage de l'arbre de machine électrique avec la coque ; le stator est monté fixement à l'intérieur de la coque ; le rotor est monté fixement sur l'arbre de machine électrique et est agencé à l'intérieur du stator ; un entrefer radial est agencé entre le rotor et le stator ; l'arbre de machine électrique et le rotor sur celui-ci passent à travers la cavité de contenance interne du stator, montés de manière à pouvoir tourner aux positions de montage déterminées par la coque et le couvercle d'extrémité ; le stator se compose d'un noyau de fer de stator (21) et d'un enroulement de stator (22) ; ledit noyau de fer de stator est un cylindre constitué par enroulement d'une bande de de ferroalliage amorphe ; ledit enroulement de stator a d'un seul tenant la forme d'un cylindre et est fixé sur la surface cylindrique interne du noyau de fer de stator ;
**caractérisée en ce que** :
une douille de renforcement métallique (25) est fixée sur la surface interne de l'enroulement de stator (22) ;
la longueur axiale de la douille de renforcement de métal est identique à celle de l'enroulement de stator ;
un entrefer radial (5) est agencé entre la surface cylindrique interne de la douille de renforcement métallique et la surface externe dudit rotor.

2. Machine électrique à ferroalliage amorphe sans fente pourvue d'un circuit magnétique radial selon la revendication 1, **caractérisée en outre en ce que** :
ledit rotor (3) se compose d'un noyau de fer de rotor (31) et d'aimants permanents (32) ;
ledit noyau de fer de rotor est une structure cylindrique creuse constituée d'un matériau de ferroalliage amorphe ;
la surface externe radiale du noyau de fer de rotor est en correspondance avec les aimants permanents ;
les aimants permanents sont encastrés sur ou enveloppés à l'extérieur de la surface externe du noyau de fer de rotor et fixés sur celui-ci.

3. Machine électrique à ferroalliage amorphe sans fente pourvue d'un circuit magnétique radial selon la revendication 2, **caractérisée en outre en ce que** :
la paroi d'alésage intérieure dudit noyau de fer de rotor (31) est pourvue d'une rainure de clavette utilisée pour le raccordement au dit arbre de machine électrique (6).

4. Machine électrique à ferroalliage amorphe sans fente pourvue d'un circuit magnétique radial selon la revendication 1, **caractérisée en outre en ce que** :
ledit rotor (3) comprend un noyau de fer de rotor et une cage d'écureuil sur sa surface ;
le noyau de fer de rotor est enveloppé sur l'arbre de machine électrique ;
ladite cage d'écureuil est montée fixement sur la surface externe du noyau de fer de rotor, assemblée dans une machine asynchrone CA ;
ledit noyau de fer de rotor (31) est une structure cylindrique creuse constituée d'un matériau de ferroalliage amorphe dont la surface externe radiale est en correspondance avec la forme de la barre de cuivre axiale ou de la barre d'aluminium axiale de ladite cage d'écureuil ;
les barres de cuivre ou d'aluminium sont encastrées dans la surface externe du noyau de fer de rotor et montées fixement par les anneaux de cuivre ou les anneaux d'aluminium aux deux extrémités.

5. Machine électrique à ferroalliage amorphe sans fente pourvue d'un circuit magnétique radial selon la revendication 4, **caractérisée en outre en ce que** :
la paroi d'alésage intérieure dudit noyau de fer de rotor (31) est pourvue d'une rainure de clavette utilisée pour le raccordement avec ledit arbre de machine électrique (6).

6. Machine électrique à ferroalliage amorphe sans fente pourvue d'un circuit magnétique radial selon l'une quelconque des revendications 1 à 5, **caractérisée en outre en ce que** :
la paroi interne dudit noyau de fer de stator (21) est installée avec des premières bobines d'isolation (23) ;
le corps principal de la première bobine d'isolation a la forme d'un cylindre dont une surface d'extrémité est fixée avec une bride radiale en forme d'anneau (232) ;
les autres extrémités qui ne sont pas fixées avec des brides pour les deux premières bobines d'isolation identiques sont respectivement encastrées à partir des deux extrémités de la cavité de contenance intérieure du noyau de fer de stator, en venant en butée l'une contre l'autre et fixées sur la paroi interne du noyau de fer de stator ;
les brides radiales en forme d'anneau aux surfaces d'extrémité desdites deux premières bobines d'isolation sont serrées contre les deux extrémités de la cavité de contenance intérieure du noyau de fer de stator.

7. Machine électrique à ferroalliage amorphe sans fente pourvue d'un circuit magnétique radial selon la revendication 6, **caractérisée en outre en ce que** :
la cavité intérieure dudit enroulement de stator est supportée par une deuxième bobine d'isolation en forme de cylindre (24) et est fixée dans celle-ci ;
la longueur axiale de la deuxième bobine d'isolation est identique à celle de l'enroulement de stator (22) ;
la paroi interne de ladite deuxième bobine d'isolation est fixée sur la surface cylindrique externe de la douille de renforcement métallique (25).

8. Machine électrique à ferroalliage amorphe sans fente pourvue d'un circuit magnétique radial comprenant un stator (2'), un rotor extérieur (3') et un arbre de palier de machine électrique (6') pour le montage ; le rotor extérieur (3') est agencé à l'extérieur du stator (2'), comprenant une coque (31'), des couvercles d'extrémité gauche et droite (34', 33') et des aimants permanents (32') ; dans lequel les aimants permanents sont encastrés dans la surface interne de la coque sous la forme de barres en nombre pair, ou directement fixés sur la surface interne de la coque sous la forme d'un cylindre creux, les couvercles d'extrémité gauche et droite sont fixés à l'extrémité gauche et à l'extrémité droite de la coque, et le rotor extérieur est monté, de manière à pouvoir tourner, sur l'arbre de palier de machine électrique ; le stator est monté fixement sur l'arbre de palier de machine électrique, comprenant le noyau de fer de stator (21') et l'enroulement de stator (22') ; ledit noyau de fer de stator est une structure cylindrique creuse constituée d'un matériau de ferroalliage amorphe ; ledit enroulement de stator est d'un seul tenant sous la forme d'un cylindre et est fixé sur la surface cylindrique externe du noyau de fer de stator ;
**caractérisée en ce que** :
une douille de renforcement métallique (25') est fixée sur l'extérieur radial de l'enroulement de stator (22') ;
la longueur axiale de la douille de renforcement métallique est identique à celle de l'enroulement de stator ;
un entrefer radial est agencé entre la surface cylindrique externe de la douille de renforcement métallique et la surface externe dudit rotor.

9. Procédé de fabrication d'une machine électrique à ferroalliage amorphe sans fente pourvue d'un circuit magnétique radial, comprenant les étapes suivantes :
a. préparation : une barre de section cylindrique creuse formée par l'enroulement d'une bande de ferroalliage amorphe est utilisée en tant qu'ébauche du noyau de fer de stator (21) et du noyau de fer de rotor (31) ;
b. élaboration du stator (2) : l'enroulement de stator (22) est d'abord préparé, puis la forme nécessaire et la taille nécessaire de l'enroulement de stator sont obtenues par découpage, et il est choisi d'exécuter l'une des étapes b1 ou b2 suivantes :
b1. si une deuxième bobine d'isolation (24) est installée pour l'enroulement de stator (22), la deuxième bobine d'isolation doit être fixée sur la surface cylindrique interne de l'enroulement de stator, puis la douille de renforcement métallique (25) doit être fixée sur la paroi interne de la deuxième bobine d'isolation ;
b2. si une deuxième bobine d'isolation (24) n'est pas installée pour l'enroulement de stator, alors la surface cylindrique interne de l'enroulement de stator (22) doit être fixée directement sur la douille de renforcement métallique (25) ;
dans lequel la douille de renforcement métallique (25) des étapes b1 ou b2 a une longueur axiale qui est identique à celle de l'enroulement de stator ;
de plus, il est choisi d'exécuter l'une des étapes b3 ou b4 à nouveau :
b3. s'il y a une première bobine d'isolation (23) dans le noyau de fer de stator, alors la première bobine d'isolation doit être fixée sur la paroi interne du noyau de fer de stator (21), et la surface cylindrique externe de l'enroulement de stator (22) doit être fixée sur la paroi interne de la première bobine d'isolation (23) et l'élaboration du stator est alors terminée ;
b4. si la première bobine d'isolation (23) n'est pas installée pour le noyau de fer de stator, alors l'enroulement de stator (22) doit être fixé directement sur la paroi interne du noyau de fer de stator (21) et l'élaboration du stator est alors terminée.

10. Procédé de fabrication d'une machine électrique à ferroalliage amorphe sans fente pourvue d'un circuit magnétique radial selon la revendication 9, comprenant en outre les étapes suivantes :
à l'étape b, l'utilisation d'un fil émaillé autoadhésif pour préparer l'enroulement de stator (22) sur le formeur d'enroulement, puis, par découpage avec une matrice de dimensionnement et par chauffage et formation selon la norme de chauffage du fil émaillé autoadhésif, la forme cylindrique nécessaire et la taille nécessaire de l'enroulement de stator sont obtenues ;
il est choisi d'exécuter l'étape b2 et la surface cylindrique interne de l'enroulement de stator (22) est reliée à la douille de renforcement métallique (25) par des adhésifs dans la matrice de dimensionnement pour la solidification et la formation ;
il est choisi d'exécuter l'étape b4 et la surface cylindrique externe de l'enroulement de stator (22) est reliée à la surface cylindrique interne du noyau de fer de stator (21) par des adhésifs pour la solidification ; puis il est effectué la cuisson et la formation entre 60°C et 100°C pendant 2 à 3 heures, et l'élaboration du stator est alors terminée.

11. Procédé de fabrication d'une machine électrique à ferroalliage amorphe sans fente pourvue d'un circuit magnétique radial selon la revendication 9, comprenant en outre les étapes suivantes :
à l'étape b : la préparation de l'enroulement de stator (22) avec un fil émaillé autoadhésif sur le formeur d'enroulement puis, par découpage avec une matrice de dimensionnement et par chauffage et formation selon la norme de chauffage du fil émaillé autoadhésif, la forme cylindrique nécessaire et la taille nécessaire de l'enroulement de stator sont obtenues ;
il est ensuite choisi d'exécuter l'étape b1 et la deuxième bobine d'isolation (24) dans la matrice de dimensionnement est reliée à la surface cylindrique interne de l'enroulement de stator (22) par des adhésifs pour la solidification et la formation, et la douille de renforcement métallique (25) dans la matrice de dimensionnement est reliée à la paroi interne de la deuxième bobine d'isolation (24) par des adhésifs pour la solidification et la formation ;
il est ensuite choisi d'exécuter l'étape b3 et les extrémités qui ne sont pas fixées avec des brides (232) pour les deux premières bobines d'isolation identiques (23) sont respectivement encastrées à partir des deux extrémités de la cavité de contenance intérieure du noyau de fer de stator (21), en venant en butée l'une contre l'autre, et liées et fixées sur la paroi interne du noyau de fer de stator par des adhésifs pour la formation ; les brides d'anneau (232) aux faces d'extrémité desdites deux premières bobines d'isolation (23) sont serrées contre les deux extrémités de la cavité de contenance intérieure du noyau de fer de stator (21) ; l'ensemble d'enroulements de stator (22, 24, 25) fabriqué selon les étapes ci-dessus sur les deux premières bobines d'isolation (23) est relié et solidifié sur la paroi interne dudit noyau de fer de stator par l'adhésif ; puis le stator complet est cuit entre 60°C et 100°C pendant 2 à 3 heures pour la formation et l'élaboration du stator est alors terminée.

12. Procédé de fabrication d'une machine électrique à ferroalliage amorphe sans fente pourvue d'un circuit magnétique radial selon la revendication 10 ou 11, comprenant en outre les étapes suivantes :
c. l'élaboration du rotor (3) : la rainure de clavette utilisée pour le raccordement à l'arbre de machine électrique (6) doit être traitée sur la paroi interne de la barre de section cylindrique creuse qui est formée par enroulement d'une bande de ferroalliage amorphe utilisée en tant qu'ébauche pour le noyau de fer de rotor (31), et il est choisi d'exécuter l'une des étapes c1 à c3 suivantes :
c1. lorsque les aimants permanents (32) sont des aimants permanents cylindriques creux avec plusieurs pôles magnétiques formés sur la surface cylindrique par magnétisation, la surface externe de l'ébauche de barre de section pour le noyau de fer de rotor (31) est le cylindre dont le diamètre extérieur correspond au diamètre intérieur du cylindre des aimants permanents (32), le noyau de fer de rotor est directement encastré dans ledit cylindre d'aimant permanent pour la liaison et la solidification, le rotor est assemblé, et la cuisson est effectuée pour la formation à une température entre 60°C et 100°C pendant 2 à 3 heures ;
c2. lorsque les aimants permanents sont des barres de section en forme de mosaïque de nombre pair ou des solides de barres de section de forme trapézoïdale,
des rainures axiales de nombre identique correspondant aux formes de section des aimants permanents sont fournies sur la surface externe du noyau de fer de rotor (31), tous les aimants permanents (32) sont encastrés dans ces rainures axiales pour la liaison et la solidification, et le rotor est assemblé pour la cuisson et la formation entre 60°C et 100°C pendant 2 à 3 heures ;
c3. lorsque le rotor a une structure de cage d'écureuil, des rainures axiales en correspondance avec les formes de barres de cuivre ou d'aluminium axiales de ladite cage d'écureuil doivent être traitées sur la surface externe du noyau de fer de rotor (31) ; des barres de cuivre ou d'aluminium de la cage d'écureuil sont encastrées dans la surface externe du noyau de fer de rotor et elles sont montées fixement par les anneaux de cuivre ou d'aluminium aux deux extrémités, puis le rotor est assemblé ;
d. le stator (2) est chargé dans la coque (1) et le rotor (3) est enveloppé sur l'arbre de machine électrique (6), ce qui termine l'élaboration des deux composants ;
e. l'assemblage de la machine électrique est terminé.

13. Procédé de fabrication d'une machine électrique à ferroalliage amorphe sans fente pourvue d'un circuit magnétique radial selon la revendication 10, 11 ou 12, dans lequel les adhésifs pour relier tous les composants dudit stator (2) et pour relier le noyau de fer de rotor (31) aux aimants permanents (32) sont des adhésifs avec un niveau de résistance à la chaleur qui n'est pas inférieur à celui de la classe d'isolation de ladite machine électrique.

14. Procédé de fabrication d'une machine électrique à ferroalliage amorphe sans fente pourvue d'un circuit magnétique radial, comprenant les étapes suivantes :
a. préparation : une barre de section cylindrique creuse formée par l'enroulement d'une bande de ferroalliage amorphe est utilisée en tant qu'ébauche du noyau de fer de stator (21') ;
b. élaboration du stator : la rainure de clavette utilisée pour raccorder l'arbre de machine électrique est traitée sur la surface d'alésage intérieur du noyau de fer de stator (21'), l'enroulement de stator (22') est préparé, puis, la forme nécessaire et la taille nécessaire de l'enroulement de stator sont obtenues par découpage ; la surface cylindrique externe de l'enroulement de stator est fixée directement dans la douille de renforcement métallique (25') ; l'enroulement de stator est enveloppé et fixé sur la surface cylindrique externe du noyau de fer de stator (21') ; le noyau de fer de stator et l'arbre de machine électrique (6') sont raccordés et fixés par des clavettes, et deux paliers sont montés pour l'arbre de paliers de machine électrique, et l'élaboration du stator (2') est alors terminée ;
dans lequel la douille de renforcement métallique (25') a une longueur axiale qui est identique à celle de l'enroulement de stator (22') ;
c. élaboration du rotor (3') : il est réalisé un nombre pair de barres ou d'aimants permanents cylindriques creux (32') ; la plaque d'acier est laminée en tant que la coque (31') ou le tuyau d'acier est directement utilisé en tant que la coque (31') ; les formes en correspondance avec celles des aimants permanents à fixer (32') sont traitées sur la paroi interne de la coque (31') ; les aimants permanents (32') sont encastrés et fixés dans la paroi interne de la coque (31'), et le rotor est assemblé ;
d. l'assemblage de la machine électrique est terminé.
